# EUROPEAN PATENT APPLICATION

(11) **EP 2 415 737 A1**
(43) Date of publication of application: **08.02.2012**
(21) Application number: 09842740.4
(22) Date of filing: 17.09.2009
(51) Int. Cl.: C05F 1/00

(54) **METHOD FOR MANUFACTURING AMINO ACID LIQUID FERTILIZER USING LIVESTOCK BLOOD AND AMINO ACID LIQUID FERTILIZER MANUFACTURED THEREBY**

(30) Priority: 01.04.2009 KR 20090028223
(71) Applicant: Oh, Jin-Yeol, Gyeonggi-do 443-771 (KR)
(72) Inventor: Oh, Jin-Yeol, Gyeonggi-do 443-771 (KR)
(74) Representative: TER MEER - STEINMEISTER & PARTNER GbR
(86) International application number: PCT/KR2009/005291
(87) International publication number: WO 2010/114203

(57) **Abstract**

The present invention relates to a method for manufacturing an amino acid liquid fertilizer using livestock blood and the amino acid liquid fertilizer manufactured thereby. More particularly, the present invention relates to a method for manufacturing an amino acid liquid fertilizer using livestock blood which is **characterized by** comprising: a 1st step of collecting livestock blood produced from a slaughterhouse and grinding the livestock blood; and a 2nd step of adding a protease extracted from soybeans to the ground blood, putting the protease-added blood into a reactor, inducing a reaction under the sealed condition, and cooling off the reactants. The amino acid liquid fertilizer according to the present invention has relatively higher amino acid content and long lasting efficiency compared with conventional liquid fertilizers, which uses blood meal as a raw material, and the absorption and movement of active ingredients into plants are maximized. Thus, the growth and development of plants is excellent and damage due to repeated cultivation would not happen because salts do not accumulate in soil during fertilizer application.

## Description

### CROSS-REFERENCE TO RELATED APPLICATIONS

This patent application claims the benefit of priority from Korean Patent Application No. 10-2009-0028223, filed on April 1, 2009, the contents of which are incorporated herein by reference.

### TECHNICAL FIELD

The present invention relates to a method for manufacturing an amino acid liquid fertilizer using livestock blood and an amino acid liquid fertilizer manufactured thereby. More particularly, the present invention relates to a new method for manufacturing an amino acid liquid fertilizer, which uses natural enzymes to degrade fresh livestock blood for minimizing the destruction of amino acids, does not cause damage due to repeated cultivation by accumulation of salts during fertilizer application, and exhibits excellent efficacy in the growth and development of plants, and to an amino acid liquid fertilizer manufactured thereby.

### BACKGROUND ART

Blood of domestic animals (pigs, cattle, etc.) is a livestock byproduct, and is stipulated by current Korean law as a waste material even though the blood is one of useful resources rich in various proteins. Thus, livestock blood requires appropriate treatments.

In Korea, livestock blood is mostly disposed of without being recycled as resources, and thus it causes a waste of useful protein resources and creates environmental hazards.

Currently, livestock blood is usually used in the manufacturing of animal protein feed, and supplied in the form of powdered blood meal by collecting livestock blood produced from a slaughterhouse and drying it.

Korean Patent Laid-Open Publication No. 2002-0022416 (Title: Manufacturing process of fertilizer) discloses a manufacturing process of an organic fertilizer, the process including: fermenting, drying, and grinding livestock blood collected from slaughter plants to manufacture powdered blood meal and mixing bioceramics, sawdust, rice bran, yeast, and photosynthetic bacteria with the powder-processed blood meal.

Also, Korean Patent Laid-Open Publication No. 2002-0089760 (Title: A manufacture method of zeolite and amino acid manure) discloses a method for manufacturing an amino acid liquid fertilizer, the method including: collecting livestock blood produced from a slaughterhouse and subjecting it to thermal degradation while being sterilized to extract a powdered blood meal that maintains a water content of about 15% or less, degrading the blood meal and dissolving a main ingredient of the fertilizer, and mixing the ingredient with a zeolite powder which is a clay mineral.

However, conventional methods using blood meal as a raw material have the following problems. First, the blood meal is manufactured by sterilizing livestock blood and subjecting the blood to processes such as coagulation, pressurization, dehydration, drying, grinding, and selection, and is essentially subjected to processes such as heat treatment (sterilization, drying, etc.) during the manufacturing of the blood meal. Such heat treatment process causes the loss of proteins included in blood and affects the solubility and the physical and chemical properties of residual proteins in the blood meal.

The loss of proteins and the changes in solubility and physical and chemical properties of proteins, and the like occurring during the manufacturing of blood meal affect the efficiency of enzymatic degradation, and furthermore adversely affect the amino acid content of a liquid fertilizer as a final product and the homogeneity of amino acids.

In addition, in order to use blood meal as a raw material, the blood meal is suspended in distilled water, etc. and subjected to pH adjustment so that the blood meal is easily degraded. In order to adjust the pH of a blood meal suspension, an acid or alkali material is essentially added. During the pH adjustment process, an acid or alkali material to be added reacts with an alkali or acid material included in the blood meal suspension to produce insoluble salts. In order to remove these insoluble salts, a separate process (desalting) should be subjected, thereby generating secondary waste materials.

When a desalting operation is not performed, insoluble salts produced during the pH adjustment process are inevitably left behind in a liquid fertilizer that is a final product. When a liquid fertilizer including these salts is used, the salts accumulate in soil, and thus an increase in the salt concentration of a plow layer due to accumulation of salts causes damage due to repeated cultivation.

Also, conventional methods using blood meal as a raw material are very disadvantageous in terms of the economy of a liquid fertilizer to be finally produced because blood meal itself is quite expensive for a raw material for the liquid fertilizer. Furthermore, it is difficult to consider conventional methods using blood meal as a raw material as a recycling of waste materials and an environmentally friendly treatment because waste water requiring secondary treatments in the manufacturing of blood meal is generated in a large amount.

Korean Patent Laid-Open Publication No. 10-2004-0065201 (Title: A manufacturing process of amino acid liquid fertilizer) discloses a method process of an amino acid liquid fertilizer, the process including: putting chymotrypsin as a protein degrading enzyme and nitric acid or sulfuric acid into blood or a corpse of an animal, treating the blood or the corpse of the animal under high temperature and high pressure conditions, and neutralizing it with calcium oxide.

However, the above-described method is a forced hydrolysis of proteins with a strong acid under rigorous conditions of high temperature and high pressure, and most of the cyclic amino acids are destructed in the degradation process of the amino acids and the amino acids are present only in the form of free amino acids. Thus, a fertilizer to be finally produced has low amino acid content and its distribution is not uniform, thereby limiting the continuous fertilizer response. In addition, a liquid fertilizer as a final product shows a strong acidity and thus should be subjected to neutralization process. Salts accumulate in the liquid fertilizer during the neutralization process and thus damage due to repeated cultivation may happen during fertilizer application.

### DISCLOSURE OF THE INVENTION

### TECHNICAL PROBLEM

In order to solve the conventional problems, the present invention provides a new method for manufacturing an amino acid liquid fertilizer using fresh livestock blood directly produced from a slaughterhouse without an additional process to manufacture blood meal from livestock blood, and an amino acid liquid fertilizer manufactured thereby.

The present invention also provides a new method for manufacturing an amino acid liquid fertilizer using livestock blood, which exhibits excellent efficacy in the growth and development of plants because amino acids are uniformly included in the amino acid fertilizer at high contents by preventing cyclic amino acids from being destructed during the degradation process of livestock blood, and an amino acid liquid fertilizer manufactured thereby.

Furthermore, the present invention provides a new method for manufacturing an amino acid liquid fertilizer using livestock blood, which does not cause damage due to repeated cultivation even during continuous fertilizer application because salts do not accumulate in the liquid fertilizer as a final product and has a continuous fertilizer response and is excellent in absorption by plants or crops, and an amino acid liquid fertilizer produced thereby.

### TECHNICAL SOLUTION

In order to achieve the object, the present invention provides a method for manufacturing an amino acid liquid fertilizer using livestock blood, the method including: a 1st step of collecting livestock blood produced from a slaughterhouse and grinding the livestock blood; and a 2nd step of adding a protease extracted from soybeans to the ground blood, putting the protease-added blood into a reactor which is maintained at about 50°C to about 70°C, inducing a reaction under the sealed condition for about 8 to about 15 hours, terminating the reaction when a pH of the blood is about 7.5 to about 8.0, and cooling off the reactants for about 3 to about 4 hours.

The present invention also provides a method for manufacturing an amino acid liquid fertilizer using livestock blood, the method further including: a 3rd step of adding urea, potash, ammonium phosphate dibasic, aqueous zinc, and EDTA to water at about 25°C to about 80°C in a separate mixing vessel and mixing the mixture completely to prepare an additive mixture solution; and a 4th step of filtering the blood prepared in the 2nd step using a 100 mesh filter and mixing the additive mixture solution prepared in the 3rd step with the filtered blood.

The present invention also provides an amino acid liquid fertilizer manufactured by the method.

### ADVANTAGEOUS EFFECTS

The present invention provides a method for manufacturing a liquid fertilizer, which does not use a blood meal manufactured by drying and processing livestock blood, but uses blood itself produced from a slaughterhouse as a raw material without being subjected to separate processes, and is advantageous in that the manufacturing process is simple because a process for manufacturing blood meal from blood is not needed and the manufacturing costs of an amino acid liquid fertilizer may be reduced.

In addition, an amino acid liquid fertilizer contains various types of amino acids including free amino acids, double peptide types, triple peptide types, etc. uniformly at high levels because collected livestock blood has not undergone forced degradation treatments at rigorous conditions, such as thermal degradation or acid degradation. Thus, an amino acid liquid fertilizer, which continuously maintains the fertilizer response, may be manufactured.

An amino acid liquid fertilizer according to the present invention does not use a blood meal having a high salt concentration as a raw material and does not need a pH adjusting step which produces insoluble salts during the manufacturing process. Thus, unlike methods using blood meal as a raw material or chemical degradation methods by strong acids, etc, salts are not left behind in the fertilizer as a final product due to neutralization (pH adjustment) processes, etc. and thus damage due to repeated cultivation is not caused because salts do not accumulate in soil even during continuous fertilizer application.

Furthermore, livestock blood may be adopted as a raw material to skip a complex manufacturing process of blood meal which produces waste water in a large amount, which requires secondary treatments, and thus livestock blood to be treated as a waste material may be recycled environmentally friendly to prevent environmental contaminations.

### BRIEF DESCRIPTION OF THE DRAWINGS

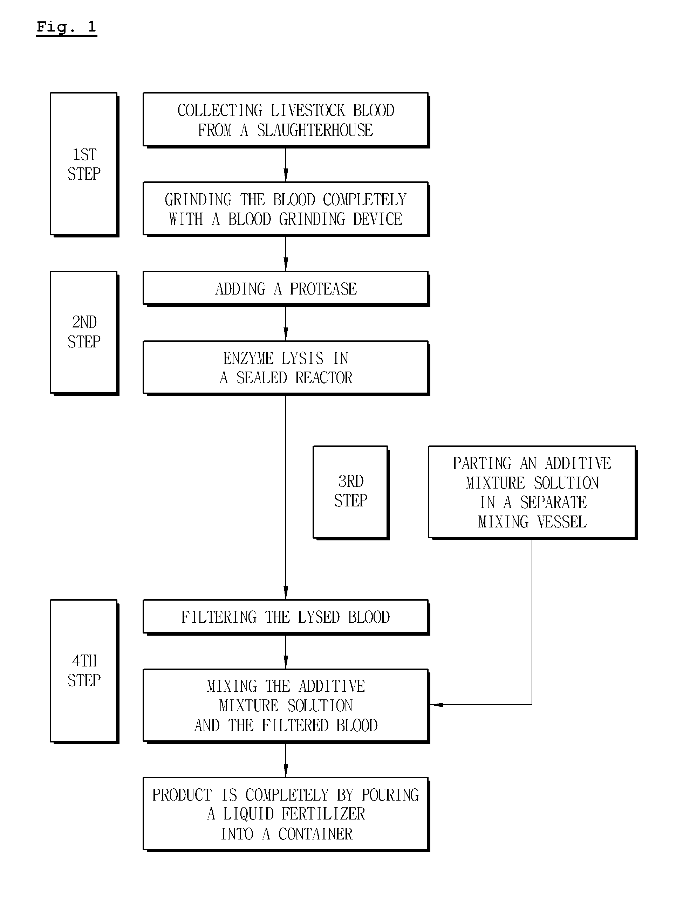

Fig. 1 is a flow diagram of a process for manufacturing an amino acid liquid fertilizer according to the present invention.

### BEST MODE

A method for manufacturing an amino acid liquid fertilizer using livestock blood according to the present invention is characterized by including: a 1st step of collecting livestock blood produced from a slaughterhouse and grinding the livestock blood; and a 2nd step of adding a protease extracted from soybeans to the ground blood, putting the protease-added blood into a reactor which is maintained at about 50°C to about 70°C, inducing a reaction under the sealed condition for about 8 to about 15 hours, terminating the reaction when a pH of the blood is about 7.5 to about 8.0, and cooling off the reactants for about 3 to about 4 hours.

In addition, a method for manufacturing an amino acid liquid fertilizer using livestock blood according to the present invention is characterized by further including: a 3rd step of adding urea, potash, ammonium phosphate dibasic, aqueous zinc, and EDTA to water at about 25°C to about 80°C in a separate mixing vessel and mixing the mixture completely to prepare an additive mixture solution; and a 4th step of filtering the blood prepared in the 2nd step using a 100 mesh filter and mixing the additive mixture solution prepared in the 3rd step with the filtered blood.

According to a preferred embodiment of the present invention, about 800 to about 1,200 cc of protease is added per 100 kg of the blood ground in the second step.

According to another preferred embodiment of the present invention, an additive mixture solution is mixed with the blood filtered in the 4th step at a weight ratio of 1:1.

In addition, an amino acid liquid fertilizer using livestock blood according to the present invention is manufactured by one of the methods.

### MODE FOR INVENTION

Hereinafter, preferred embodiments of the present invention will be described in detail. However, the following embodiments are provided for illustrating the present invention, and the scope of the present invention is not limited to the embodiments described below.

First, a 1st step in a method for manufacturing a liquid fertilizer according to the present invention is a process of collecting blood of domestic animals (pigs, cattle, etc.) produced from a slaughterhouse and grinding the blood. Blood, which is one of byproducts produced from a slaughterhouse, is collected, stored in a low temperature warehouse maintained at about 0°C in order to prevent the blood from being decayed, and used as a main ingredient for manufacturing a liquid fertilizer. Although livestock blood is stored at low temperatures, it may be easily decayed and thus it is desirable to store livestock blood for 2 days or less.

Blood vessels and tendons are additionally mixed in livestock blood collected from a slaughterhouse, and blood itself is easily coagulated and thus blood should be subjected to grinding process in order to facilitate its degradation before blood is put into a reactor to be degraded. If livestock blood is directly put into a reactor without being subjected to grinding process to perform degradation, partially coagulated blood or blood vessels, tendons, etc. mixed in blood are not completely degraded by enzymatic actions, and thus an odor which is not favorable may be generated from a liquid fertilizer as a final product. When the liquid fertilized is applied to plants or crops, gas, which may affect the growth and development of plants adversely, may be generated to wither plants.

Although a known grinder may be used to grind blood, a blood grinding device in the form of a millstone, in which grinding plates made of a hard mineral such as diamond are provided in the upper and lower sides (or left and right sides) to constitute a group, may be used. When the above-described blood grinding device is used, blood vessels, tendons, etc which are additionally mixed in livestock blood may be completely ground.

Next, a degradation agent (enzyme), that is, protease is added to blood in which partially coagulated blood, or blood vessels, tendons, etc are completely ground through the grinding process in the 1st step. Protease is an enzyme that hydrolyzes peptide bonds with a protein and exists widely in tissues or cells of animals or plants, or microorganisms. In the present invention, a plant-derived protease may be preferably used, and a protease extracted from soybeans may be more preferably used.

About 800 to about 1200 cc of protease may be preferably added per 100 kg of blood ground, and about 1000 cc of protease may be more preferably added per 100 kg of blood. When less than about 800 cc of protease is added per 100 kg of blood, the concentration of the enzyme is lower than that of a substrate (protein ingredient in blood), delaying the reaction rate. When more than about 1200 cc of protease is added per 100 kg of blood, the reaction rate may be relatively improved. However, the enzyme is expensive and thus it is relatively disadvantageous in terms of manufacturing costs.

Meanwhile, when blood is subjected to forced degradation process under rigorous conditions (high temperature, high pressure, etc.) in the same manner as conventional methods, most of cyclic amino acids which are essential for the growth and development of plants are destructed by acids and thus amino acids are not uniformly dispersed. Meanwhile, the degradation process of enzymes according to the present invention is performed under mild conditions and thus protein ingredients included in livestock blood may be degraded into not only free amino acids but also various types of amino acids such as double peptide types, triple peptide type, etc. and thus a fertilizer response may be continuously maintained during fertilizer application.

In addition, because the fertilizer is chelated with amino acids in which trace elements such as potassium (K), etc., useful in the growth and development of crops during the enzymatic degradation are produced and absorption and transfer of the fertilizer into plants are facilitated, it is very excellent in terms of fertilizer response.

The livestock blood ground in the 1st step is transferred into a reactor through a pipe by means of a transfer pump, and protease is added to the blood during the transfer or protease is directly added to the reactor after the blood is all transferred into the reactor.

A typically known reactor may be used as the reactor. However, a reactor which consists of a triple jacket and may control the temperature of the reactor by using warm water (triple jacket stirring tank) may be preferably used. The internal temperature of a reactor may be preferably controlled at about 50°C to about 70°C by circulating warm water heated in advance to about 70°C or more before the ground blood is transferred from a blood grinding device into the reactor, and most preferably, the temperature of the reactor is set at about 56°C. If the temperature of the reactor is less than about 50°C, the time for reaction (degradation of blood) is prolonged and the degradation may not proceed completely to generate an odor from a liquid fertilizer as a final product. When the temperature is more than about 70°C, the reaction time may be reduced. However, it costs a lot to maintain the temperature and the degradation of amino acids proceeds to lower the content of amino acids in a liquid fertilizer as a final product.

When the temperature of the reactor is set at about 50°C to about 70°C, livestock blood is transferred from a blood grinding device into a reactor through a pipe by means of a transfer pump and a degradation is performed while the blood is being stirred for about 8 to about 15 hours. When the reaction time is less than about 8 hours, the degradation does not proceed completely. When the reaction time is more than about 15 hours, an additional degradation is relatively small and thus economic gains may not be obtained. The pH of ground blood may be adjusted to determine whether the degradation is completely performed. When the pH of blood degraded within about 8 to about 15 hours after the reaction starts is measured and the pH reaches a value in the range of about 7.5 to about 8.0, it is thought that the degradation is completed, and the reaction is terminated. After the reaction (degradation) is completed, the reactants are left in the reactor for about 3 to about 4 hours to cool off the reactants to room temperature completely.

The blood degradation process in the reactor is performed under anaerobic conditions in which the reactor is completely sealed. Therefore, the reactor may be maintained at a temperature appropriate for degradation by sealing the reactor, and the blood ground may be prevented from contacting with air and being decayed during the degradation process.

Livestock blood which has been completely degraded by being subjected to the 1st and 2nd steps may be used itself as an organic fertilizer rich in amino acids. The 3rd and 4th step process may be additionally performed on livestock blood which has been subjected to the 1st and 2nd steps to manufacture a liquid compound fertilizer (Category IV compound fertilizer) in which urea, potash, phosphoric acid, etc. are included.

The 3rd step is a step in which an additive mixture solution to be added to the degraded blood is prepared in a separate mixing vessel. Water at about 25°C to about 80°C is put into the mixing vessel, to which urea, potash, ammonium phosphate dibasic, aqueous zinc, and EDTA are added for complete mixing. The additive mixture solution may preferably consist of 65.836% by weight of water, 8.54% by weight of urea (purity 46%), 15.2% by weight of potash (purity 60%), 10.32% by weight of ammonium phosphate dibasic (purity 98%), 0.044% by weight of aqueous zinc (purity 96%), and 0.06% by weight of EDTA (purity 98%). The EDTA is an additive to satisfy the fertilizer application standards for foliar application of Category IV compound fertilizer.

Next, the blood (blood cooled to room temperature after being subjected to grinding and degrading processes) prepared in the 2nd step is filtered and the additive mixture solution prepared in the 3rd step is mixed with the filtered blood (4th step).

The filtration of blood may be preferably performed using an about 100-mesh filter, and blood cooled to room temperature after being subjected to degrading process in the reactor is allowed to pass through a filtering machine equipped with a 100-mesh filtering net.

In livestock blood, livestock hairs or furs incorporated during the slaughtering process and small amounts of blood vessels and tendons which have not been ground may be left behind. When a liquid fertilizer as final product is applied (a liquid fertilizer is applied by using a spraying means), a filtering process is performed in order to prevent the nozzle of a sprayer from being clogged by the residual materials described above.

The blood passing through the filtering machine is transferred into a final product tank, and the additive mixture solution prepared in the separate mixing vessel is mixed with the blood (blood subjected to degrading and filtering processes) transferred in the final product tank to manufacture an amino acid liquid fertilizer as a final product. In the 4th step, the additive mixture solution may be preferably mixed with the filtered blood at a weight ratio of 1:1. For example, about 0.5 ton of the additive mixture solution is mixed with about 0.5 ton of the filtered blood to manufacture about 1 ton of the amino acid liquid fertilizer.

After the 4th step, the amino acid liquid fertilizer as a final product is transferred into a distribution tank by means of a transfer pump, and then the amino acid liquid fertilizer is distributed to a standardized container in the distribution tank and packed to form a final product. The amino acid liquid fertilizer manufactured by being subjected to each step is packed as a product and a stabilized state in which an additional decaying is prevented from being generated is maintained.

In order to manufacture an organic amino acid liquid fertilizer according to the present invention as described above, a blood grinding device for collecting livestock blood produced from a slaughterhouse to grind coagulated blood, blood vessels, tendons, etc included in the blood, and a blood reactor consisting of a triple jacket for adding protease to the blood completely ground through the blood grinding device to degrade the livestock blood under sealed conditions at a constant temperature (about 50°C to about 70°C) for a predetermined time (about 8 to about 15 hours) are needed.

In addition, in order to further manufacture a Category IV compound fertilizer from the organic amino acid liquid fertilizer, a separate mixing vessel for mixing urea, potash, ammonium phosphate dibasic, aqueous zinc, and EDTA with water to manufacture an additive mixture solution, a blood filtering machine equipped with a 100-mesh filtering net for additionally removing impurities such as livestock hairs or furs, etc. included in blood completely degraded from the blood reactor, and a final product tank for mixing the blood passing through the blood filtering machine with the additive mixture solution at a weight ratio of 1:1 to manufacture a category IV compound fertilizer are needed.

Hereinafter, the present invention will be described in more detail with reference to Example.

### <Example 1>: Manufacture of amino acid liquid fertilizer using blood of pigs

Blood of pigs produced from a slaughterhouse was collected and completely ground for 20 minutes by using a blood grinding device. About 2000 cc of protease extracted from soybeans was added to about 200 kg of the ground pig blood. Next, warm water heated to about 70°C was circulated into a triple jacket reactor to set the internal temperature of the reactor at about 56°C, the protease-added pig blood was poured into the reactor through a pipe by means of a transfer pump, the reactor was sealed, and the reactants were allowed to be degraded for about 11 hours. The pH of the pig blood degraded after 11 hours was measured to confirm that the pH was about 7.7, the degradation was terminated, and the reactor was left at room temperature for 3 hours to cool off the reactants. The result of an ingredient analysis performed on 18 amino acids in the liquid fertilizer as manufactured above is shown in the following Table 1 (Comparative Example shows a result of an ingredient analysis performed on a liquid fertilizer manufactured by using a livestock blood meal commercially available).

**Table 1**

| Ingredient | Example 1 (%) | Comparative Example (%) |
|---|---|---|
| Aspartic acid | 2.11 | 0.95 |
| Threonine | 0.68 | 0.32 |
| Serine | 0.90 | 0.42 |
| Glutamic acid | 1.75 | 0.84 |
| Proline | 1.02 | 0.37 |
| Glycine | 0.85 | 0.40 |
| Alanine | 1.44 | 0.67 |
| Valine | 1.46 | 0.67 |
| Isoleucine | 0.19 | 0.09 |
| Leucine | 2.29 | 1.06 |
| Tyrosine | 0.32 | 0.15 |
| Phenylalanine | 1.16 | 0.55 |
| Histidine | 1.28 | 0.56 |
| Lysine | 1.64 | 0.77 |
| Arginine | 0.54 | 0.27 |
| Cystine | 0.28 | 0.13 |
| Methionine | 0.13 | 0.04 |
| Tryptophan | 0.19 | 0.09 |
| Total | 19.23 | 8.35 |

As shown in the Table 1, an amino acid liquid fertilizer manufactured according to the present invention exhibited a significantly improved result in contents of 18 amino acids essential for the growth and development of plants, compared to conventional liquid fertilizers.

Although the present invention has been described in detail with reference to the preferred embodiments thereof, it is apparent to those skilled in the art that a variety of modifications and changes may be made without departing from the scope of the present invention. Therefore, such changes or modifications are within the scope of claims of the present invention.

## Claims

1. A method for manufacturing an amino acid fertilizer using livestock blood, the method comprising:
a 1st step of collecting livestock blood produced from a slaughterhouse and grinding the livestock blood; and
a 2nd step of adding a protease extracted from soybeans to the ground blood, putting the protease-added blood into a reactor which is maintained at about 50°C to about 70°C, inducing a reaction under the sealed condition for about 8 to about 15 hours, terminating the reaction when a pH of the blood is about 7.5 to about 8.0, and cooling off the reactants for about 3 to about 4 hours.

2. The method of claim 1, further comprising:
a 3rd step of adding urea, potash, ammonium phosphate dibasic, aqueous zinc, and EDTA to water at about 25°C to about 80°C in a separate mixing vessel and mixing the mixture completely to prepare an additive mixture solution; and
a 4th step of filtering the blood prepared in the 2nd step using a 100 mesh filter and mixing the additive mixture solution prepared in the 3rd step with the filtered blood.

3. The method of claim 1, wherein about 800 cc to about 1200 cc of protease is added per about 100 kg of the blood ground in the 2nd step.

4. The method of claim 2, wherein the additive mixture solution is mixed with the filtered blood at a weight ratio of 1:1.

5. An amino acid liquid fertilizer using livestock blood, manufactured by a method as claimed in any one of claims 1 to 4.
